# EUROPEAN PATENT APPLICATION

(11) **EP 1 976 200 A1**
(43) Date of publication of application: **01.10.2008**
(21) Application number: 07251413.6
(22) Date of filing: 30.03.2007
(51) Int. Cl.: H04L 12/56

(54) **Network bootstrapping**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

A multi-protocol label switching (MPLS) network and a method of bootstrapping the MPLS network. To establish a control plane mechanism in an MPLS network without using IP control packets, MPLS routers are provided with preconfigured labels. A MPLS control plane mechanism is established by exchanging control plane information encapsulated in MPLS packets having the preconfigured labels.

## Description

### Field of the Invention

The present invention relates to MPLS network integrity and in particular to a method of bootstrapping an MPLS network without using IP packets.

### Background to the Invention

### MPLS

Multi-Protocol Label Switching (MPLS) is an Internet Engineering Task Force (IETF)-specified framework that provides for the efficient designation, routing, forwarding, and switching of traffic flows through the network. MPLS is often referred to as a Layer 2.5 protocol because it remains independent of Layer 2 and Layer 3 networks. In particular, MPLS performs the following functions:
- specifies mechanisms to manage traffic flows of various granularities, such as flows between different hardware, machines, or even flows between different applications
- provides a means to map IP addresses to simple, fixed-length labels used by different packet-forwarding and packet-switching technologies
- interfaces to existing routing protocols such as resource reservation protocol (RSVP) and open shortest path first (OSPF)
- supports the IP, ATM, and frame-relay Layer-2 protocols

In MPLS, data transmission occurs on label-switched paths (LSPs). LSPs are a sequence of labels at each and every node along the path from the source to the destination. LSPs are established either prior to data transmission (control-driven) or upon detection of a certain flow of data (data-driven). The labels, which are underlying protocol-specific identifiers, are distributed using label distribution protocol (LDP) or RSVP or piggybacked on routing protocols like border gateway protocol (BGP) and OSPF. Each data packet encapsulates and carries the labels during their journey from source to destination. Highspeed switching of data is possible because the fixed-length labels are inserted at the very beginning of the packet or cell and can be used by hardware to switch packets quickly between links.

### MPLS Control Plane

Control plane mechanisms must be established before data packets can be transferred across the network. MPLS uses the following mechanisms:
- Interior Gateway Protocol (IGP) - OSPF or RIP are used to distribute network topology information through the network so that the LSP can be calculated.
- Label Distribution Protocol (LDP) - routers use a label distribution protocol such as LDP or RSVP to advertise their labels for IGP learned routes to each other.
- Border Gateway Protocol - BGP is not needed on every router in a MPLS network, only the edges of the network (PE). PE routers have full BGP routes whereas core routers use labels to forward packets.

### MPLS Data Plane

Once a MPLS network has converged, data can start to be forwarded across the core network. Generally on convergence, the interior gateway protocol starts building the necessary routing within the network. Once this is complete the label distribution protocol will start propagating labels in the opposite direction to actual data flow.

A collection of MPLS enabled devices represents an MPLS domain. Within an MPLS domain, a path or tunnel called a Label Switched Path (LSP) is set up for a given packet to travel based on a Forward Equivalence Class (FEC). A FEC is a representation of a group of packets that share the same requirements for their transport.

The LSP is set up prior to data transmission. MPLS provides the following two options to set up an LSP.
- hop-by-hop routing-Each LSR independently selects the next hop for a given FEC.
- explicit routing- the first PE (i.e., the PE where the data flow to the network first starts) specifies the list of devices through which the packet will travel. Along the path, the resources may be reserved to ensure QoS to the data traffic. This eases traffic engineering throughout the network, and differentiated services can be provided using flows based on policies or network management methods.

Availability problems in IP/MPLS networks have a wide range of cause, from deliberate attacks directed specifically against the MPLS network, to mis-configurations in routers of the network.

### Logical separation of the control and data planes

It is desirable to provide a logical separation of the data and control planes in an MPLS network to improve the integrity of the network. Separating the control plane from the data plane helps to ensure that internal control plane messages are separated from the user data messages. This mitigates the chances of a user's data packet being incorrectly interpreted as a control plane message or being used to access a processor within the network. Plane separation reduces the level of interaction between the operation of data forwarding and control functions. In this way, compromising the operation of one plane does not compromise the operation of the other plane.

The control plane of an MPLS network is used primarily to boot and maintain a network and to allow it to maintain connectivity with other network domains. This includes the routing and signalling protocols of a network as well as some essential services such as DHCP, DNS and SIP. Control information is usually exchanged between:
i) edge routers and interior routers;
ii) interior routers to other interior routers; and
iii) external routers to edge routers.

In such an approach, edge routers and interior routers can send control traffic but external routers can usually only send control traffic to edge routers in a given network domain.

MPLS networks currently operate an IP control plane and given the vulnerabilities of IP networks, it is clear that MPLS networks will also be affected by such vulnerabilities.

In particular, MPLS uses IP as its control plane both during the network boot sequence and during normal operation. The present invention aims to remove IP during the bootstrap sequence.

### Summary of the Invention

In one aspect, the present invention provides a method of establishing a control plane mechanism on an MPLS network having a plurality MPLS routers, the method comprising the steps of: providing each MPLS router with a set of preconfigured labels; and exchanging control plane information encapsulated in MPLS packets having a label matching at least one of the preconfigured labels.

Preferable features are set out in the dependent claims.

### Brief Description of the Drawings

In order that the present invention be better understood, an embodiment thereof will now be described with reference to the accompanying drawings in which:
Figure 1 schematically shows an overview of an MPLS network according to an embodiment of the present invention;
Figure 2 schematically shows the structure of a control plane packet transmitted between routers in the MPLS network shown in Figure 1;
Figure 3 schematically shows the format of a MPLS label illustrated in figure 2;
Figure 4 shows a flowchart describing the processing of each MPLS router during the bootstrap phase to establish control plane mechanisms

### Detailed Description

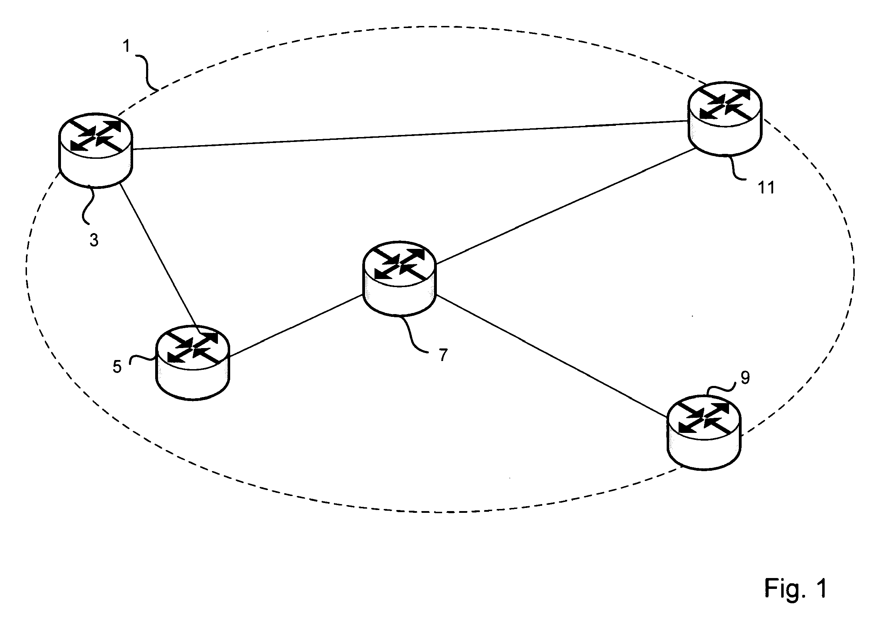

Figure 1 shows an overview of an MPLS network 1. The MPLS network 1 is includes a number of MPLS routers 3, 5, 7, 9, 11. Whilst the MPLS routers are physically connected, control plane mechanisms have not yet been established and therefore the MPLS routers 3, 5, 7, 9 are not aware of their surrounding neighbours nor the paths that a packet must take across the network to reach a destination.

The process of establishing these control plane mechanisms prior to using the network for forwarding data plane packets will be referred to as "bootstrapping" the network.

In an embodiment of the present invention, prior to bootstrapping the MPLS network, each MPLS router 3, 5, 7, 9, 11 in the MPLS network 1 is pre-configured with a set of bootstrap labels. In the embodiment, the bootstrap labels are loaded onto each MPLS router 3, 5, 7, 9, 11 before each router is added to the network.

The bootstrap labels are used during bootstrapping to establish control plane mechanisms. In particular, control plane messages are sent across the network as MPLS packets and not I P packets.

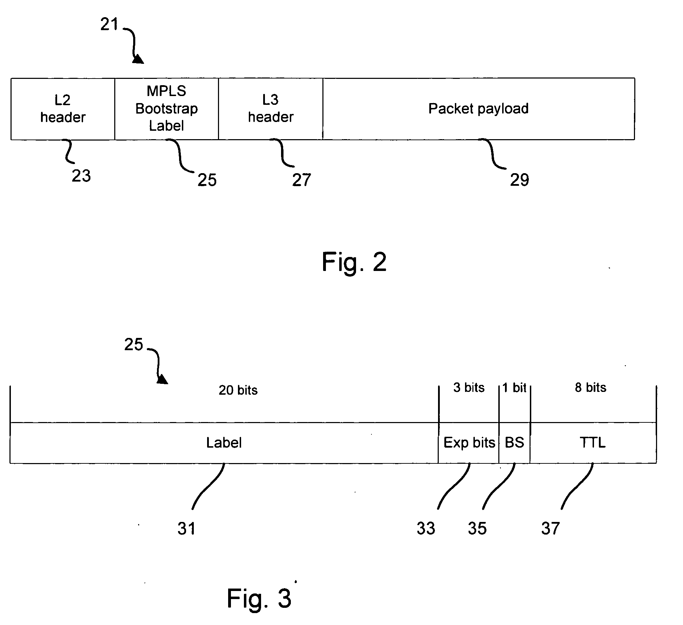

Figure 2 shows the structure of an MPLS packet 21 transferred during the bootstrap phase of the network 1. The packet 21 has four parts: a Layer 2 header 23; an MPLS bootstrap label 25, a layer 3 header; and a packet payload.

The bootstrap label 25 of the MPLS packet 21 is used to identify a legitimate control plane packet to each MPLS router 3, 5, 7, 9, 11. In particular, an MPLS router 3, 5, 7, 9, 11 will only forward a received packet to higher layer processes if the value of the bootstrap label 25 matches one of the MPLS router's preconfigured labels.

Figure 3 schematically shows the structure of an MPLS bootstrap label 25. The MPLS label 25 is a 32 bit length header formed of four fields:
- a twenty bit label value field 31;
- a three bit field for quality of service (QoS) priority (an experimental function) 33;
- a one bit bottom-of-stack flag 35; and
- a eight bit time-to-live (TTL) field 37.

The twenty bit label value field 31 provides for 1048576 unique MPLS label values. In the embodiment, a set of the label values are reserved for use as MPLS bootstrap labels. During normal operation of the MPLS network, these reserved label values will not be used for example as labels for routing data plane packets..

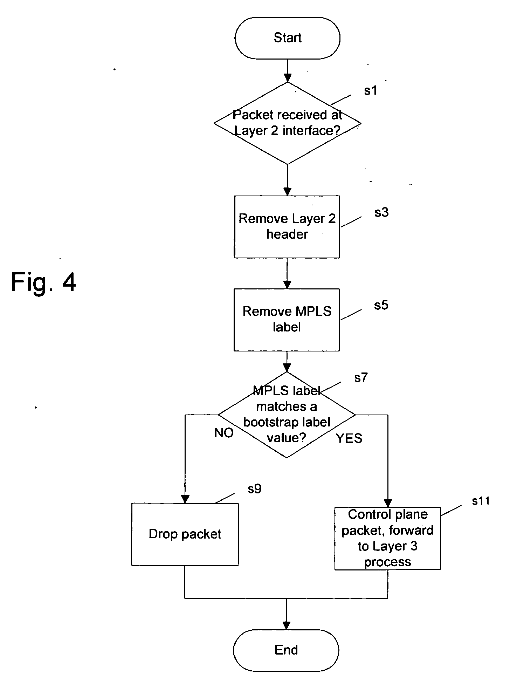

Figure 4 shows a flowchart describing the processing of each MPLS router during the bootstrap phase to establish control plane mechanisms. At step s1, the router polls for new packets at a network interface until a packet is received. When a packet is received, at step s3 the router removes the layer 2 header to reveal the MPLS label. At step s5 the MPLS label is removed from the packet for inspection. If at step s7 the MPLS label does not match any of the routers set of preconfigured labels, then at step s9 the packet is dropped from the router. During normal operation of the MPLS network, packets are switched across the network using labels. However, during network bootstrap there should not be any data plane packets being switched across the network and therefore the packet is either not relevant to the receiving router or is a malicious packet.

Alternatively, if the value of the received MPLS label does match one of the router's preconfigured labels, at step s11 the received packet content is delivered to a layer 3 protocol process such as OSPF or LDP.

In the above described embodiment, the MPLS routers are provided with preconfigured bootstrap labels so that the MPLS network 1 can operate a control plane without using IP. This improves the resilience of the MPLS network 1 during the bootstrap phase because a router of the network cannot be compromised with knowledge of just the IP address of the router. In the embodiment, each router does not recognise a received packet as being a control plane packet unless the bootstrap label of the received packet matches one of the preconfigured bootstrap labels.

### Alternatives and modifications

In the embodiment, the preconfigured labels are manually added to each router prior to bootstrap. For improved security, the bootstrap labels are periodically changed simultaneously for all routers via a management interface.

## Claims

1. A method of establishing a control plane mechanism on an MPLS network prior to use of the MPLS network to route data plane packets, the MPLS network having a plurality of MPLS routers, the method comprising the steps of:
providing each MPLS router with a set of preconfigured labels; and
exchanging control plane information encapsulated in MPLS packets having a label matching at least one of the preconfigured labels.

2. A method according to claim 1, wherein the set of preconfigured labels is manually added to each MPLS router.

3. A method according to claim 1 or claim 2, wherein the set of preconfigured labels is periodically updated via a management interface.

4. A method according to any preceding claim wherein the set of preconfigured labels is the same for each the plurality of MPLS routers.

5. A method according to any of claims 1 to 3, wherein the set of preconfigured labels is the different for each the plurality of MPLS routers.

6. A method according to any preceding claim, wherein the set of preconfigured labels comprises a reserved set of label values, which values are different from any label values used for subsequent routing of data plane packets.

7. A method according to any preceding claim, further comprising the steps of:
comparing the label of a MPLS packet; and
if the label does not match one of the preconfigured labels, dropping the MPLS packet.
